# EUROPEAN PATENT APPLICATION

(11) **EP 2 223 732 A1**
(43) Date of publication of application: **01.09.2010**
(21) Application number: 10151554.2
(22) Date of filing: 25.01.2010
(51) Int. Cl.: B01D 53/32, B01D 53/92, F01N 3/08

(54) **Exhaust gas purification system**

(30) Priority: 06.02.2009 JP 2009025928
(71) Applicant: Kabushiki Kaisha Toyota Jidoshokki, Kariya-shi, Aichi 448-8671 (JP)
(72) Inventor: Koide, Naotaka, Kariya-shi Aichi 448-8671 (JP); Kawauchi, Hiroyasu, Kariya-shi Aichi 448-8671 (JP); Kato, Yoshifumi, Kariya-shi Aichi 448-8671 (JP)
(74) Representative: TBK-Patent

(57) **Abstract**

An exhaust gas purification system which purifies exhaust gas discharged from an internal combustion engine (1) includes an exhaust pipe (2), an electrochemical reactor (3) and a cooler (4). The exhaust gas flows through the exhaust pipe. The electrochemical reactor is mounted to the exhaust pipe and has a polyelectrolyte membrane. The cooler is provided at a position that is upstream of the electrochemical reactor for cooling the exhaust gas.

## Description

### BACKGROUND OF THE INVENTION

The present invention relates to an exhaust gas purification system and more particularly to an exhaust gas purification system with an electrochemical reactor having a polyelectrolyte membrane.

Japanese Unexamined Patent Application Publication No. 2002-113468 discloses a fluid refinery including an electrochemical cell having a cathode, an anode and a polyelectrolyte membrane located between the cathode and the anode. The cathode of the electrochemical cell is provided with catalyst which expedites hydroxyl radical production, and fluid such as waste water is oxidized by contact with the cathode for refining.

If such a fluid refinery is mounted to the exhaust pipe of a diesel engine for refining exhaust gas discharged from the diesel engine, there arises a problem with heat resistance because operating temperature of the polyelectrolyte membrane is at most 100 degrees Celsius while the temperature of the exhaust gas is raised to a level of hundreds of degrees Celsius.

The present invention is directed to an exhaust gas purification system which purifies exhaust gas discharged from an internal combustion engine by an electrochemical reactor having a polyelectrolyte membrane.

### SUMMARY OF THE INVENTION

According to the present invention, there is provided an exhaust gas purification system which purifies exhaust gas discharged from an internal combustion engine. In accordance with an aspect of the present invention, the exhaust gas purification system includes an exhaust pipe, an electrochemical reactor and a cooler. The exhaust gas flows through the exhaust pipe. The electrochemical reactor is mounted to the exhaust pipe and has a polyelectrolyte membrane. The cooler is provided at a position that is upstream of the electrochemical reactor for cooling the exhaust gas.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing an exhaust gas purification system according to a first embodiment of the present invention;
Fig. 2 is a schematic view showing an exhaust gas purification system according to a second embodiment of the present invention; and
Fig. 3 is a cross sectional view showing a modification of a cooler for use in the exhaust gas purification system according to the first or second embodiment.

### DETAILED DESCRIPTION OF THE PREFERRED EMBODIMENTS

The following will describe the embodiments of the present invention with reference to the accompanying drawings.

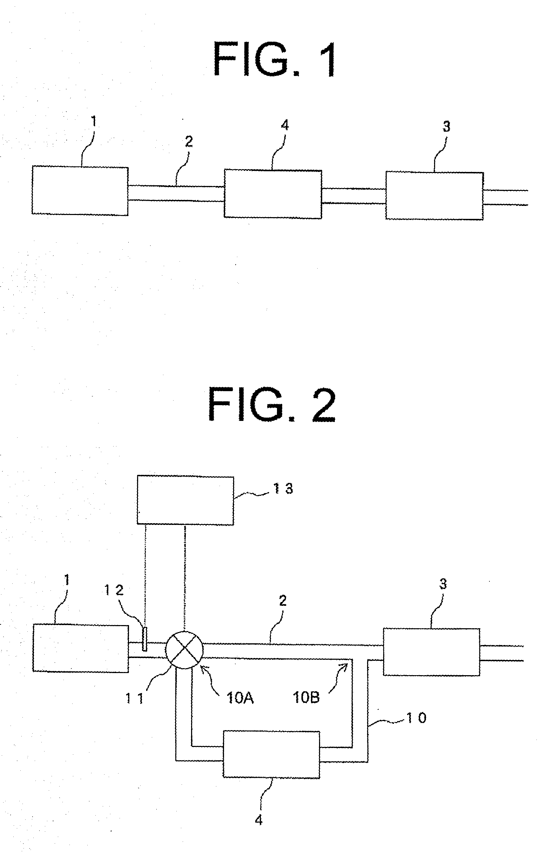

Referring to Fig. 1 showing the exhaust gas purification system according to the first embodiment, reference numeral 1 denotes a diesel engine provided with an exhaust pipe 2 through which exhaust gas discharged from the diesel engine 1 flows. The diesel engine 1 serves as the internal combustion engine of the present invention. An electrochemical reactor 3 is mounted to the exhaust pipe 2. In addition, a cooler 4 is mounted to the exhaust pipe 2 at a position upstream of the electrochemical reactor 3 for cooling exhaust gas flowing through the exhaust pipe 2.

The electrochemical reactor 3 includes an electrochemical cell having a cathode, an anode and a polyelectrolyte membrane located between the cathode and the anode. For example, Nation, which is a registered trademark of E. I. du Pont de Nemours and Company, may be used for the polyelectrolyte membrane. The cooler 4 may be of a water-cooling type.

The operation of the exhaust gas purification system according to the first embodiment will now be described. Though depending on the operating condition of the diesel engine 1, exhaust gas discharged from the diesel engine 1 and flowing through the exhaust pipe 2 increases its temperature up to about 600 degrees Celsius. In general, as the temperature of the exhaust gas rises, the purification efficiency of the exhaust gas in the electrochemical reactor 3 is increased. However, the operating temperature of the polyelectrolyte membrane of the electrochemical reactor 3 is at most in the order of 100 degrees Celsius. Therefore, if the exhaust gas is passed directly through the electrochemical reactor 3, the polyelectrolyte membrane may be damaged. In order to prevent such damage, the cooler 4 is located upstream of the electrochemical reactor 3, so that the exhaust gas flowing through the cooler 4 is cooled by heat exchange with cooling water flowing through the cooler 4 to a temperature below 100 degrees Celsius. When the exhaust gas thus cooled to a temperature below 100 degrees Celsius flows through the electrochemical reactor 3, nitrogen oxides (NOₓ) in the exhaust gas is reduced to nitrogen, water and so forth by electrochemical reaction. Nitrogen oxides (NOₓ) in the exhaust gas are thus purified and emitted to the atmosphere.

While it is preferable that the temperature of the exhaust gas should be low for the prevention of damage of the polyelectrolyte membrane, it is preferable that the temperature of the exhaust gas should be high for the purification efficiency. Therefore, the cooling of the exhaust gas by the cooler 4 should preferably be controlled at a temperature that is slightly lower than the upper limit of the operating temperature of the polyelectrolyte membrane. In the first embodiment wherein the cooler 4 is located upstream of the electrochemical reactor 3, the exhaust gas is cooled in the range of operating temperatures of the polyelectrolyte membrane before it is passed through the electrochemical reactor 3 for purification. Therefore, the exhaust gas discharged from the diesel engine 1 is purified without causing any damage to the polyelectrolyte membrane.

The exhaust gas purification system according to the second embodiment will be described with reference to Fig. 2. In the second embodiment, like reference numerals indicate like parts used in the description of the first embodiment and the detailed description of such parts will be omitted. The second embodiment differs from the first embodiment in that a bypass pipe is connected to the exhaust pipe 2 and the cooler 4 is mounted to the bypass pipe.

As shown in Fig. 2, the bypass pipe 10 is connected to the exhaust pipe 2 at a position that is upstream of the electrochemical reactor 3 for allowing the exhaust gas to flow to the electrochemical reactor 3 through the bypass pipe 10. The bypass pipe 10 has on the opposite ends thereof an upstream end 10A and a downstream end 10B at which the exhaust pipe 10 is connected. A three-way valve 11 is mounted to the connecting point of the upstream end 10A and the exhaust pipe 2 and serves as the selector valve of the present invention. A sensor 12 is mounted to the exhaust pipe 2 at a position upstream of the three-way valve 11 for measuring the temperature of the exhaust gas flowing through the exhaust pipe 2. The three-way valve 11 and the sensor 12 are electrically connected to an electronic control unit (ECU) 13.

The operation of the exhaust gas purification system according to the second embodiment will now be described. The temperature of the exhaust gas discharged and flowing through the exhaust pipe 2 is measured by the sensor 12. The sensor 12 sends or outputs to the ECU 13 an electrical signal indicative of the temperature of the exhaust gas. When the diesel engine 1 has just been started or running under a low load, the temperature of the exhaust gas is generally low and even may be lower than 100 degrees Celsius. If the exhaust gas directly flows through the electrochemical reactor 3 under such low temperature condition, the polyelectrolyte membrane of the electrochemical reactor 3 is not damaged by heat. In this case, the ECU 13 actuates the three-way valve 11 so that the exhaust gas is directly passed through the electrochemical reactor 3 without being cooled by the cooler 4. By so doing, the temperature of the exhaust gas does not be decreased more than necessary by the cooler 4. Thus, decrease in the purification efficiency of the electrochemical reactor 3 is prevented.

On the other hand, when the temperature of the exhaust gas measured by the sensor 12 is increased higher than 100 degrees Celsius, the ECU 13 actuates the three-way valve 11 so that the exhaust gas is passed through the bypass pipe 10. The exhaust gas flowing through the bypass pipe 10 is cooled by the cooler 4 to a temperature below 100 degrees Celsius. Thus, the cooled gas flows through the electrochemical reactor 3, so that nitrogen oxides (NOₓ) in the exhaust gas are reduced to nitrogen, water and so forth by electrochemical reaction without causing any damage to the polyelectrolyte membrane of the electrochemical reactor 3 by heat. Thus, nitrogen oxides (NOₓ) in the exhaust gas are purified and emitted to the atmosphere. As in the first embodiment, cooling of the exhaust gas by the cooler 4 should be done with consideration given to the protection of the polyelectrolyte membrane and exhaust gas purification efficiency in connection with the exhaust gas temperature.

In the second embodiment wherein the bypass pipe 10 having the cooler 4 is connected to the exhaust pipe 2 at a position that is upstream of the electrochemical reactor 3, the three-way valve 11 is mounted to the exhaust pipe 2 at a position that is upstream of the electrochemical reactor 3 for selecting the flow of the exhaust gas either through or not through the bypass pipe 10, and the ECU 13 is provided for controlling the operation of the three-way valve 11 based on the temperature of the exhaust gas, the temperature of the exhaust gas does not be decreased more than necessary. Therefore, the exhaust gas discharged from the diesel engine 1 is purified without causing any damage to the polyelectrolyte membrane and additionally a decrease in the purification efficiency of the electrochemical reactor 3 is prevented.

The present invention has been described in the context of the above embodiments, but it is not limited to those illustrated embodiments. It is obvious that the invention may be practiced in various manners as exemplified below.

Although in the second embodiment the cooler 4 is mounted to the bypass pipe 10, the cooler 4 may be mounted to the exhaust pipe 2 at a position between the upstream end 10A and the downstream end 10B of the bypass pipe 10.

Although in the second embodiment the temperature of exhaust gas is directly measured by the sensor 12, it may be measured otherwise. In a modification of the second embodiment, a data map representing the relation between operating condition (speed or fuel oil consumption) of the diesel engine 1 and temperature of exhaust gas is provided in the ECU 13 and the exhaust gas temperature is estimated from the operating condition in accordance with such data map.

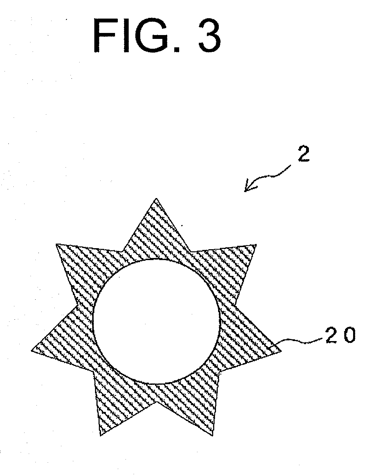

Although the cooler 4 of the first and second embodiments is of a water cooling type, the cooler 4 is not limited to the water cooling type. The exhaust pipe 2 may be formed on the outer periphery thereof at a position upstream of the electrochemical reactor 3 with a concavo-convex portion 20 having an expanded surface area, as shown in Fig. 3. In the case of Fig. 3, the concavo-convex portion 20 of the exhaust pipe 2 is of a star shape in cross-section so as to increase the surface area of the outer periphery of the exhaust pipe 2. Unlike the water cooling type of Figs. 1 and 2, the concavo-convex portion 20 does not positively cool the exhaust gas, but it enhances the efficiency of cooling the exhaust gas flowing through the exhaust pipe 2 by increasing the surface area of the outer periphery of the exhaust pipe 2. Thus, the concavo-convex portion 20 can be used as the cooler of the present invention.

An exhaust gas purification system which purifies exhaust gas discharged from an internal combustion engine includes an exhaust pipe, an electrochemical reactor and a cooler. The exhaust gas flows through the exhaust pipe. The electrochemical reactor is mounted to the exhaust pipe and has a polyelectrolyte membrane. The cooler is provided at a position that is upstream of the electrochemical reactor for cooling the exhaust gas.

## Claims

1. An exhaust gas purification system for purifying exhaust gas discharged from an internal combustion engine (1), **characterized in that**
an exhaust pipe (2) is provided through which the exhaust gas flows,
wherein an electrochemical reactor (3) is mounted to the exhaust pipe (2) and has a polyelectrolyte membrane, and
wherein a cooler (4) is provided at a position that is upstream of the electrochemical reactor (3) for cooling the exhaust gas.

2. The exhaust gas purification system according to claim 1, **characterized in that**
a bypass pipe (10) is connected to the exhaust pipe (2) at a position that is upstream of the electrochemical reactor (3) for allowing the exhaust gas to flow to the electrochemical reactor (3) through the bypass pipe (10),
wherein a selector valve (11) is mounted to the exhaust pipe (2) for selecting the flow of the exhaust gas either through or not through the bypass pipe (10), and
wherein the cooler (4) is mounted to one of the exhaust pipe (2) and the bypass pipe (10).

3. The exhaust gas purification system according to claim 2, **characterized in that** the selector valve (11) is mounted to a connecting point of an upstream end (10A) of the bypass pipe (10) and the exhaust pipe (2).

4. The exhaust gas purification system according to claim 2, **characterized in that** a control unit (13) is provided for controlling the selector valve (11) based on a temperature of the exhaust gas.

5. The exhaust gas purification system according to claim 4, **characterized in that** a sensor (12) is mounted to the exhaust pipe (2) at a position that is upstream of the selector valve (11) for measuring the temperature of the exhaust gas and outputting a signal of temperature to the control unit (13).

6. The exhaust gas purification system according to claim 4, **characterized in that** the control unit (13) has a data map for representing relation between operating condition of the internal combustion engine (1) and the temperature of the exhaust gas, wherein the control unit (13) estimates the temperature of the exhaust gas from the operating condition in accordance with the data map.

7. The exhaust gas purification system according to any one of claims 1 through 6, **characterized in that** cooling water flows though the cooler (4), wherein the exhaust gas is cooled by heat exchange with the cooling water in the cooler (4).

8. The exhaust gas purification system according to any one of claims 1 through 6, **characterized in that** the cooler (4) has a concavo-convex portion (20) formed on an outer periphery of the exhaust pipe (2) at a position that is upstream of the electrochemical reactor (3).
